# EUROPÄISCHE PATENTSCHRIFT

(11) **EP 2 504 593 B1**
(45) Veröffentlichungstag und Bekanntmachung des Hinweises auf die Patenterteilung: **28.01.2015**
(21) Anmeldenummer: 11787604.5
(22) Anmeldetag: 07.11.2011
(51) Int. Cl.: F16D 3/68

(54) **SCHWERLASTKLAUENKUPPLUNG**
HEAVY DUTY CLAW COUPLING
ACCOUPLEMENT A CRABOTAGE POUR CHARGES LOURDES

(30) Priorität: 16.11.2010 DE 102010051381
(43) Veröffentlichungstag der Anmeldung: 03.10.2012
(73) Patentinhaber: R+W Antriebselemente GmbH, 63911 Klingenberg (DE)
(72) Erfinder: RIMPEL, Andreas, 63933 Mönchberg (DE)
(74) Vertreter: Säger, Manfred
(86) Internationale Anmeldenummer: PCT/EP2011/005582
(87) Internationale Veröffentlichungsnummer: WO 2012/065693

(56) Entgegenhaltungen:
- EP-A1- 0 133 944
- DE-A1- 2 029 223
- DE-A1- 2 404 714
- DE-A1- 4 437 239
- DE-B- 1 211 872
- DE-U- 7 308 140
- GB-A- 479 576
- US-A- 2 122 838

## Beschreibung

Die Erfindung betrifft eine gattungsgemäße Schwerlastklauenkupplung nach dem Oberbegriff des Hauptanspruchs, nämlich eine zur Übertragung eines Drehmomentes in Umfangsrichtung dienende Schwerlastklauenkupplung mit zwei, mit gleicher Anzahl und mit kongruentem Querschnitt versehenen sowie um einen bestimmten Versatzwinkel rotationssymmetrisch angeordnete Klauen aufweisenden und um eine Achse drehbaren Kupplungshälften, wobei die Klauen der einen Kupplungshälfte in Zwischenräumen zwischen den Klauen der anderen Kupplungshälfte unter Zwischenordnung je eines separaten, sich in radialer Richtung erstreckenden Dämpfungselementes angeordnet sind, *wobei jedes der Dämpfungselemente zylinderförmig mit zwei an den zwei zueinander benachbarten Klauen anliegenden, mit kleiner werdendem Radius konisch zueinander verlaufenden Flanken ausgebildet ist, die dort den Zylindermantel bilden, und wobei die beiden Flanken jedes der Dämpfungselemente in deren radial innerem Bereich über eine gekrümmte Mantelfläche miteinander verbunden sind, wobei die die beiden Flanken jedes der Dämpfungselemente in deren radial innerem Bereich verbindende gekrümmte Mantelfläche an einer Schmiegefläche einer der beiden zueinander benachbarten Klauen anliegt und wobei diese bezüglich der anderen Klaue ein Spiel aufweist (vgl.* EP 0 133 944 A1*).*

Gattungsgemäße Schwerlastklauenkupplungen sind an *sich* bekannt (DE 20 2006 006 455 U1). Diese bekannte Kupplung weist kegelstümpfförmige Dämpfungselemente auf, die wegen der geringen Anlagefläche unerwünscht partiell große Drücke und Torsionskräfte zur Folge haben können, die nicht nur die Standzeit der Kupplung sondern auch deren Zuverlässigkeit bei einem defekten Dämpfungselement verringert.

*In der* DE 44 37 239 A1 *ist eine Klauenkupplung offenbart, bei der unzulässige Spannungen im Dämpfungselement vermieden werden sollen.*

Der Erfindung liegt die Aufgabe zugrunde, eine gattungsgemäße Schwerlastklauenkupplung nach dem Oberbegriff des Hauptanspruchs zuverlässiger und mit größerer Standzeit auszugestalten.

Diese Aufgabe wird bei einer gattungsgemäßen Schwerlastklauenkupplung nach dem Oberbegriff des Hauptanspruchs erfindungsgemäß durch dessen kennzeichnende Merkmale, also dadurch gelöst, dass *das Dämpfungselement nur um dieses Spiel maximal zusammengedrückt werden kann sowie ein Kraftschluss über die dann zur Anlage aneinander kommenden Klauen und nicht über das Dämpfungselement stattfindet und dass jedes der Dämpfungselemente in deren radial äußerem Umfangsbereich eine auf ihrer einen Seite durch einen radial nach außen vorstehenden Vorsprung begrenzte Ausnehmung für einen Halter zum unverlierbaren Festlegen an der Kupplungshäfte aufweist, wobei der Vorsprung eine Ausnehmung aufweist, in die eine Abkröpfung des Halters zwecks Arretierung des Dämpfungselementes in Richtung der Achse eingreift.*

Mit der erfindungsgemäßen Schwerlastklauenkupplung wird also die Geometrie der vorzugsweise aus einem Elastomer oder Gummi bestehenden Dämpfungselemente so in die Form eines senkrechten Zylinders (in mathematisch/topologischer Definition) abgeändert, dass deren Flanken immer rechtwinklig zur Umfangsrichtung - um die Drehachse - ausgerichtet und damit in überraschend einfacher Weise keiner Belastung durch unerwünschte Torsionskräfte ausgesetzt sind. Es kommt hinzu, dass die Dämpfungselemente von außen her in Richtung der Achse sichtbar sind und auch das Verdrehspiel von außen ohne Zerlegung der Kupplung aufgrund der Zylinderform mit Vorteil schon optisch oder mit einer Lehre überprüft werden kann. Durch Änderung der Tiefe der Anordnung der Dämpfungselemente zwischen zwei benachbarten Klauen kann außerdem das Spiel der Kupplung bis zu völliger Spielfreiheit problemlos und im zusammengebauten Zustand verändert werden, ganz abgesehen davon, dass auch der Austausch einzelner Dämpfungselemente ohne Zerlegung der Kupplung in axialer Richtung schnell und einfach möglich sein soll. Bei entsprechend nachgiebigem Material kann über die die Spielfreiheit ergebende Anlage hinaus noch eine Vorspannung erreicht werden.

Hierbei wird einerseits eine satte Anlage einerseits, andererseits eine gute Auswechselbarkeit des Dämpfungselementes dann erreicht, wenn jede der Flanken von einer Ebene gebildet ist, die an den entsprechend geformten, einander zugewandten Anlageflächen der beiden zueinander benachbarten Klauen anliegen, insbesondere dann, wenn die einander zugewandten Anlageflächen der beiden zueinander benachbarten Klauen und die beiden Flanken jedes der Dämpfungselemente sich in einer Geraden schneiden, die parallel zu der um die Achse drehbaren Kupplungshälften verläuft.

Zweckmäßigerweise sind dabei die beiden Flanken jedes der Dämpfungselemente in deren radial innerem Bereich über eine gekrümmte Mantelfläche miteinander verbunden.

Jedes der Dämpfungselemente *weist* in deren radial äußerem Umfangsbereich eine Ausnehmung für einen Halter zum unverlierbaren Festlegen an der Kupplungshäfte auf, mit dem auch das Einstellen des Verdrehspiels der Kupplung möglich ist, wobei die Ausnehmung auf ihrer einen Seite durch einen radial nach außen vorstehenden Vorsprung begrenzt *ist*.

*In vorteilhafter Weise ist* die Ausnehmung als Rampe ausgebildet, die auf ihrer anderen Seite in ein Plateau übergeht, so dass jedes der Dämpfungselemente bezüglich seiner Radialmittelebene unsymmetrisch ausgebildet ist. Das Plateau kann entweder als Tangentialebene oder Umfangsmantelflache ausgebildet sein.

Um eine definierte Lage in Richtung der Achse der Dämpfungselemente zwischen den Kupplungshälften zu gewährleisten, weist die Stirnseite jedes der Dämpfungselemente einen Nocken auf, der ballig ausgebildet ist.

Weitere zweckmäßige Ausgestaltungen und Weiterbildungen der Erfindung sind in den Unteransprüchen gekennzeichnet.

Ausführungsbeispiele der Erfindung *werden* nachfolgend unter Bezugnahme auf die Zeichnung näher erläutert. In dieser zeigt:
- Figur 1: eine erste Ausführungsform einer Kupplung, unvollständig zusammengebaut, in schematischer Seitenansicht;
- Figur 2: die erste nicht-erfindungsgemäße Ausführungsform der Kupplung, vollständig bestückt;
- Figur 3: eine erste nicht-erfindungsgemäße Ausführungsform eines Dämpfungselements, in Seitenansicht;
- Figur 4: das Dämpfungselement (Fig. 3), in Ansicht;
- Figur 5: eine erste nicht-erfindungsgemäße Ausführungsform eines Halters für das Dämpfungselement;
- Figur 6: eine zweite erfindungsgemäße Ausführungsform eines Dämpfungselements, in Seitenansicht;
- Figur 7: das Dämpfungselement (Fig. 6), in Ansicht;
- Figur 8: eine zweite erfindungsgemäße Ausführungsform eines Halters für das Dämpfungselement, in Seitenansicht.

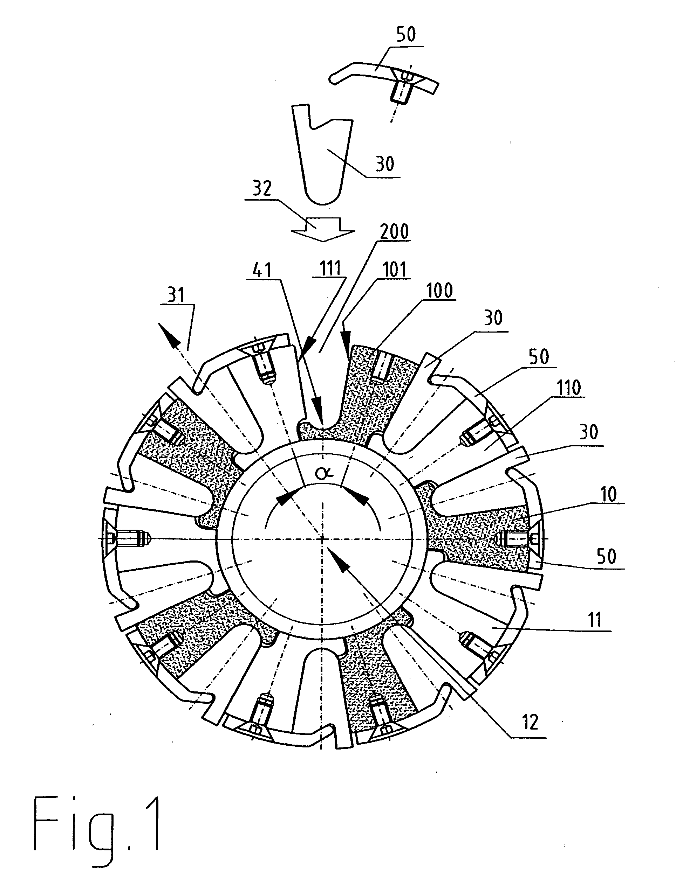

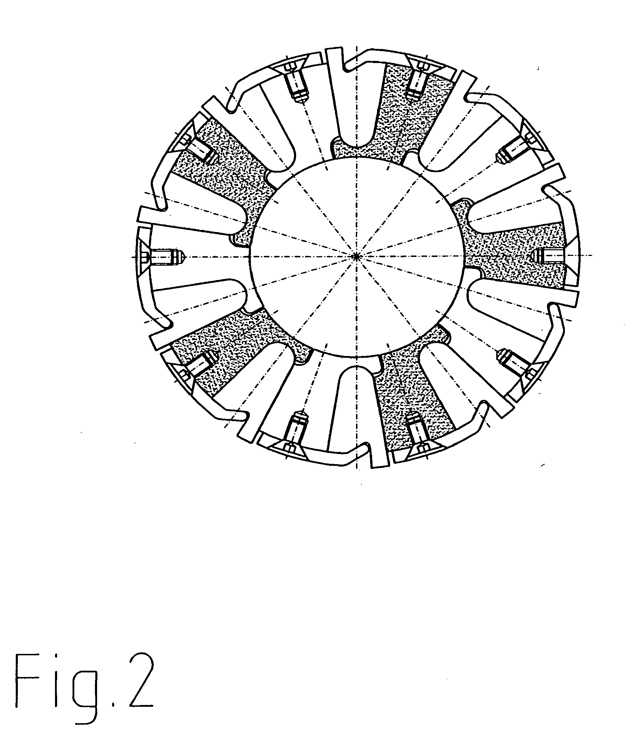

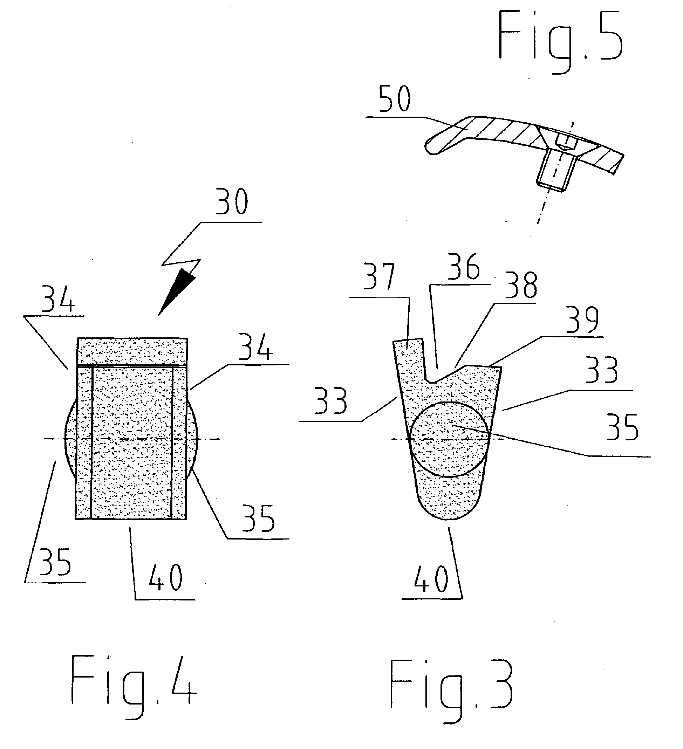

Die in Figur 1 dargestellte erste nicht-erfindungsgemäße Ausführungsform der Klauenschwerlastkupplung ist noch unvollständig bestückt. Sie dient zur Übertragung eines Drehmomentes in Umfangsrichtung dienende Klauenschwerlastkupplung, nachfolgend kurz Kupplung genannt, und weist zwei, mit gleicher Anzahl, nämlich fünf und mit kongruentem Querschnitt versehene sowie um einen bestimmten Versatzwinkel a rotationssymmetrisch angeordnete Klauen 10,11 von zwei um eine Achse 12 drehbaren Kupplungshälften 100,110 auf, wobei die Klauen 10 der einen Kupplungshälfte 100 in Zwischenräumen 200 zwischen den Klauen 11 der anderen Kupplungshälfte 110 unter Zwischenordnung je einer ersten Ausführungsform eines separaten, sich in radialer Richtung 31 erstreckenden Dämpfungselementes 30 aus einem Elastomer oder Gummi angeordnet sind. Das separate Dämpfungselement 30 gemäss Figur 3 wird gemäss Richtungspfeil 32 in der radialen Richtung 31 in die Kupplung eingesetzt und mit einem Halter 50 nach Figur 5 unverlierbar an der einen Kupplungshäfte 100 vermittels einer Schraube festgelegt, so dass sich die vollständig zusammengesetzte Kupplung nach Figur 2 ergibt.

Wie aus den Figuren 3 und 4 ersichtlich, weist jedes der Dämpfungselemente 30 in die Form eines senkrechten Zylinders (in mathematisch/topologischer Definition) mit zwei, an den beiden Anlageflächen 101,111 der zwei zueinander benachbarten Klauen 10,11 anliegenden, mit kleiner werdendem Radius 31 konisch aufeinander zu verlaufenden Flanken 33 (Figur 3) sowie nicht an den Klauen 10,11 anliegenenden sowie zueinander parallelen Stirnseiten 34 (die die Innen- oder Aussenseite der Kupplung bilden) auf, wobei jede der Flanken 33 von einer Ebene gebildet ist, die an den entsprechend geformten, einander zugewandten Anlageflächen 101,111 anliegen. Diese und die beiden Flanken 33 jedes der Dämpfungselemente 30 schneiden sich in einer Geraden, die parallel zu der um die Achse 12 drehbaren Kupplungshälften 100,1110 verläuft.

Überdies weist die Stirnseite 34 jedes der Dämpfungselemente 30 einen Nocken 35 auf, der ballig ausgebildet ist, so dass eine definierte Lage der Dämpfungselemente 30 zwischen den Kupplungshälften 100,110 in Richtung der Achse 12 gewährleistet ist.

Jedes der Dämpfungselemente 30 weist in deren radial äusseren Umfangsbereich eine Ausnehmung 36 für den Halter 50 zum unverlierbaren Festlegen an der Kupplungshäfte 100,110 auf. Diese Ausnehmung 36 ist auf ihrer einen Seite durch einen radial nach aussen vorstehenden Vorsprung 37 begrenzt. Die Ausnehmung 36 ist dabei als Rampe 38 ausgebildet, die auf ihrer anderen Seite in ein Plateau 39 übergeht, das entweder als Tangentialebene oder als Umfangsmantelfläche ausgebildet sein kann.

Die beiden Flanken 33 jedes der Dämpfungselemente 30 sind in deren radial innerem Bereich über eine gekrümmte Mantelfläche 40 miteinander verbunden, die an einer Schmiegefläche 41 einer der beiden zueinander benachbarten Klauen 10 anliegt, die bezüglich der anderen Klaue 11 ein Spiel aufweist, so dass das Dämpfungselement 30 nur um dieses Spiel maximal zusammengedrückt werden kann, weil dann über die zur Anlage aneinander kommenden Klauen 10,11 aber nicht über das Dämpfungselement 30 ein Kraftschluss stattfindet.

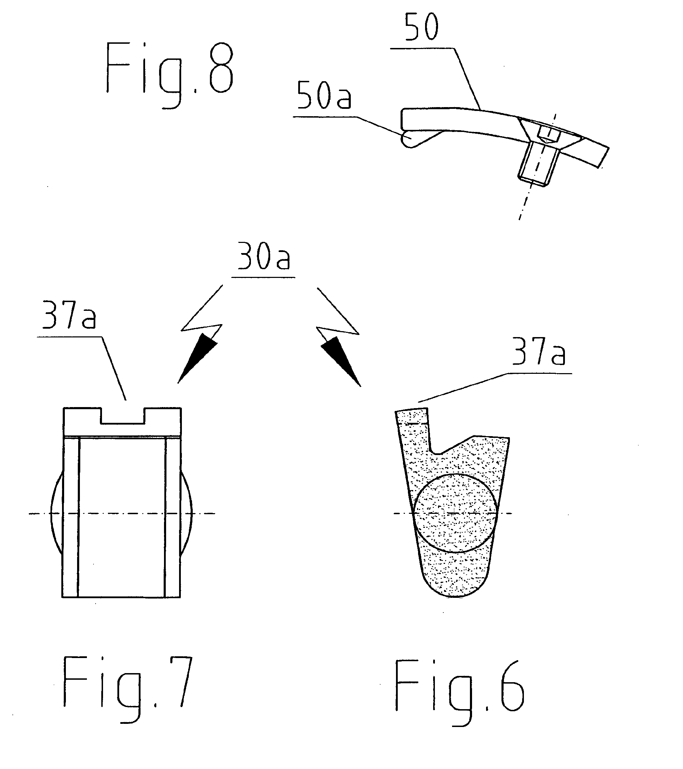

Figuren 6 bis 8 zeigen je eine zweite erfindungsgemäße Ausführungsform eines Halters 50 und eines Dämpfungselementes 30a, das auch in Richtung des Achse 12 festgelegt ist. Dazu weist das Dämpfungselement 30a an seinem Vorsprung 37 eine Ausnehmung 37a auf, an die eine Abkröpfung 50a des Halters eingreift und damit gegen seitliche Bewegungen festlegt.

## Patentansprüche

1. Zur Übertragung eines Drehmomentes in Umfangsrichtung dienende Klauenschwerlastkupplung mit zwei, mit gleicher Anzahl und mit kongruentem Querschnitt versehenen sowie um einen bestimmten Versatzwinkel (α) rotationssymmetrisch angeordnete Klauen (10,11) aufweisenden und um eine Achse (12) drehbaren Kupplungshälften (100, 110), wobei die Klauen der einen Kupplungshälfte (100) in Zwischenräumen (200) zwischen den Klauen (11) der anderen Kupplungshälfte (110) unter Zwischenordnung je eines separaten, sich in radialer Richtung (31) erstreckenden Dämpfungselementes (30) angeordnet sind, wobei jedes der Dämpfungselemente (30) zylinderförmig mit zwei an den zwei zueinander benachbarten Klauen (10, 11) anliegenden, mit kleiner werdendem Radius konisch zueinander verlaufenden Flanken (33) ausgebildet ist, die dort den Zylindermantel bilden, und wobei die beiden Flanken (33) jedes der Dämpfungselemente *(30)* in deren radial innerem Bereich über eine gekrümmte Mantelfläche (40) miteinander verbunden sind, *wobei* die die beiden Flanken jedes der Dämpfungselemente (30) in deren radial innerem Bereich verbindende gekrümmte Mantelfläche (40) an einer Schmiegefläche (41) einer der beiden zueinander benachbarten Klauen (10) anliegt und *wobei* diese bezüglich der anderen Klaue (11) ein Spiel aufweist,
**dadurch gekennzeichnet,**
- **dass** das Dämpfungselement (30) nur um dieses Spiel maximal zusammengedrückt werden kann sowie ein Kraftschluss über die dann zur Anlage aneinander kommenden Klauen (10, 11) und nicht über das Dämpfungselement (30) stattfindet *und*
- ***dass** jedes der Dämpfungselemente (30) in deren radial äußerem Umfangsbereich eine auf ihrer einen Seite durch einen radial nach außen vorstehenden Vorsprung (37) begrenzte Ausnehmung (36) für einen Halter (50) zum unverlierbaren Festlegen an der Kupplungshälfte (100, 110) aufweist, wobei der Vorsprung (37) eine Ausnehmung (37a) aufweist, in die eine Abkröpfung (50a) des Halters zwecks Arretierung des Dämpfungselementes (30) in Richtung der Achse (12) eingreift.*

2. Kupplung nach Anspruch 1, **dadurch gekennzeichnet, dass** jede der Flanken (33) von einer Ebene gebildet ist, die an den entsprechend geformten, einander zugewandten Anlageflächen (101, 111) der beiden zueinander benachbarten Klauen (10, 11) anliegt.

3. Kupplung nach einem der vorhergehenden Ansprüche, **dadurch gekennzeichnet, dass** die einander zugewandten Anlageflächen (101, 111) der beiden zueinander benachbarten Klauen (10, 11) und die beiden Flanken (33) jedes der Dämpfungselemente *(30)* sich in einer Geraden schneiden, die parallel zu den um die Achse (12) drehbaren Kupplungshälften (100, 110) verläuft.

4. Kupplung nach *einem der vorhergehenden Ansprüche,* **dadurch gekennzeichnet, dass** die Ausnehmung als Rampe (38) ausgebildet ist, die auf ihrer anderen Seite in ein Plateau (39) übergeht.

5. Kupplung nach Anspruch *4*, **dadurch gekennzeichnet, dass** das Plateau als Tangentialebene oder Umfangsmantelfläche ausgebildet ist.

6. Kupplung nach einem der vorhergehenden Ansprüche, **dadurch gekennzeichnet, dass** die Stirnseite (34) jedes der Dämpfungselemente *(30)* einen Nocken (35) aufweist, der ballig ausgebildet ist.

## Claims

1. A heavy-duty claw coupling used for the transmission of a torque in the circumferential direction with two coupling halves (100, 110) comprising claws (10, 11), which are provided equal in number and with a congruent cross-section and disposed rotation-symmetrically with a specific offset angle (α), and being rotatable about an axis (12), wherein the claws of the one coupling half (100) are disposed in intermediate spaces (200) between the claws (11) of the other coupling half (110) with the interposition in each case of a separate damping element (30) extending in the radial direction (31), wherein each of the damping elements (30) is constituted cylindrical with two flanks (33) lying adjacent to the two mutually adjacent claws (10, 11) and running towards one another conically with a diminishing radius, said flanks forming there the lateral cylinder surface, and wherein the two flanks (33) of each of the damping elements (30) are connected to one another in their radially inner region by a curved lateral surface (40), wherein the two flanks of each of the damping elements (30) lie, in curved lateral surface (40) connecting their radially inner region, adjacent to a close-fitting surface (41) of one of the two mutually adjacent claws (10) and wherein the latter has a clearance with respect to the other claw (11),
**characterised in that**
- the damping element (30) can be compressed at most only by this clearance and an interference fit takes place via the claws (10, 11) then resting against one another and not via the damping element (30) and
- each of the damping elements (30) comprises, in their radially outer peripheral region, a recess (36) for a holder (50) for the captive fixing to the coupling half (100, 110), said recess being bordered on its one side by a projection (37) projecting radially outwards, wherein the projection (37) comprises a recess (37a), into which an offset portion (50a) of the holder engages in order to lock the damping element (30) in the direction of the axis (12).

2. The coupling according to claim 1, **characterised in that** each of the flanks (33) is constituted by a plane which lies adjacent to the correspondingly formed and mutually facing contact surfaces (101, 111) of the two mutually adjacent claws (10, 11).

3. The coupling according to any one of the preceding claims, **characterised in that** the mutually facing contact surfaces (101, 111) of the two mutually adjacent claws (10, 11) and the two flanks (33) of each of the damping elements (30) intersect in a straight line, which runs parallel to the coupling halves (100, 110) rotatable about the axis (12).

4. The coupling according to any one of the preceding claims, **characterised in that** the recess is constituted as a ramp (38), which transforms on its other side into a plateau (39).

5. The coupling according to claim 4, **characterised in that** the plateau is constituted as a tangential plane or a circumferential lateral surface.

6. The coupling according to any one of the preceding claims, **characterised in that** the end face (34) of each of the damping elements (30) comprises a cam (35) which is constituted crown-shaped.

## Revendications

1. Accouplement à crabots pour charges lourdes destiné à transmettre un couple dans le sens périphérique, comprenant deux demi-accouplements (100, 110) qui peuvent tourner autour d'un axe (12) et sont dotés d'un nombre égal de crabots (10, 11) de section identique disposés de façon symétrique en rotation selon un angle de décalage (α) déterminé, les crabots de l'un des demi-accouplements (100) étant disposés dans les interstices (200) entre les crabots (11) de l'autre demi-accouplement (110), un élément amortisseur (30) séparé s'étendant dans la direction radiale (31) étant à chaque fois intercalé, chacun des éléments amortisseurs (30) étant de forme cylindrique et présentant deux flancs (33) qui reposent contre les deux crabots (10, 11) adjacents et qui, à mesure que le rayon diminue, s'étendent de façon conique l'un par rapport à l'autre, ces flancs formant l'enveloppe cylindrique, et les deux flancs (33) de chacun des éléments amortisseurs (30), dans leur zone radialement intérieure, étant reliés entre eux par une surface courbée (40), la surface courbée (40) reliant les deux flancs de chacun des éléments amortisseurs (30) dans leur zone radialement intérieure reposant contre une surface biseautée (41) d'un des deux crabots (10) adjacents et ce crabot présentant un jeu par rapport à l'autre crabot (11),
**caractérisé en ce que**
l'élément amortisseur (30) ne peut être comprimé au maximum que de ce jeu, et une liaison à force s'établit au moyen des crabots (10, 11) venant alors en appui l'un contre l'autre, et non au moyen de l'élément amortisseur (30) et
**en ce que** chacun des éléments amortisseurs (30) comprend dans leur zone périphérique radialement extérieure un évidement (36), délimité sur l'une de leurs faces par une partie saillante (37) faisant saillie radialement vers l'extérieur, pour un support (50) permettant une fixation imperdable sur le demi-accouplement (100, 110), la partie saillante (37) présentant un évidement (37a) dans lequel un coude (50a) du support peut s'insérer pour le blocage de l'élément amortisseur (30) en direction de l'axe (12).

2. Accouplement selon la revendication 1, **caractérisé en ce que** chacun des flancs (33) est formé par un plan reposant sur les surfaces d'appui (101, 111) formées de manière correspondante et tournées l'une vers l'autre des deux crabots (10, 11) adjacents.

3. Accouplement selon l'une quelconque des revendications précédentes, **caractérisé en ce que** les surfaces d'appui (101, 111) tournées l'une vers l'autre des deux crabots (10, 11) adjacents et les deux flancs (33) de chacun des éléments amortisseurs (30) se coupent en une droite, laquelle s'étend parallèlement aux demi-accouplements (100, 110) pouvant tourner autour de l'axe (12).

4. Accouplement selon l'une quelconque des revendications précédentes, **caractérisé en ce que** l'évidement est réalisé sous la forme d'une rampe (38), laquelle, sur son autre face, se prolonge dans un plateau (39).

5. Accouplement selon la revendication 4, **caractérisé en ce que** le plateau est réalisé sous la forme d'un plan tangentiel ou d'un surface périphérique.

6. Accouplement selon l'une quelconque des revendications précédentes, **caractérisé en ce que** la face frontale (34) de chacun des éléments amortisseurs (30) présente une came (35), laquelle est bombée.
